# EUROPÄISCHE PATENTSCHRIFT

(11) **EP 1 389 449 B1**
(45) Veröffentlichungstag und Bekanntmachung des Hinweises auf die Patenterteilung: **03.06.2009**
(21) Anmeldenummer: 03018490.7
(22) Anmeldetag: 14.08.2003
(51) Int. Cl.: A61C 17/02, A61C 1/00

(54) **Vorrichtung zum geregelten Erwärmen von Medien in einem zahnärztlichen Handstück**
Device for the regulated heating of fluids in a dental handpiece
Dispositif pour l'échauffement régulé de fluides dans une pièce à main dentaire

(30) Priorität: 16.08.2002 DE 10237520; 19.12.2002 DE 10259798
(43) Veröffentlichungstag der Anmeldung: 18.02.2004
(73) Patentinhaber: Kaltenbach & Voigt GmbH, 88400 Biberach (DE)
(72) Erfinder: Schmid, Gerhard, 88441 Mittelbiberach (DE); Löhn, Gerd, 88400 Biberach-Rissegg (DE); Liebhardt, Franz, 88416 Ochsenhausen (DE); Mösslang, Hubert, 89610 Oberdischingen (DE)
(74) Vertreter: Schmidt-Evers, Jürgen

(56) Entgegenhaltungen:
- DE-A- 3 901 198
- US-A- 5 123 839
- US-A- 5 271 087

## Beschreibung

Die vorliegende Erfindung betrifft eine Vorrichtung zum geregelten Erwärmen von Medien in einem zahnärztlichen Handstück, insbesondere einem zahnärztlichem Spritzhandstück.

Spritzhandstücke werden an zahnärztlichen Behandlungsplätzen zu verschiedenen Zwecken eingesetzt, beispielsweise zum Ausblasen von Behandlungsstellen im Mund des Patienten oder für Spülungen. Dabei bieten Spritzhandstücke in der Regel auch die Möglichkeit, ein Wasser-Luft-Gemisch in Form eines Sprays zum Kühlen oder Reinigen von Behandlungsstellen abzugeben. Zu diesem Zweck weist das Handstück eine Düse auf, über die Wasser, Luft oder Wasser und Luft gleichzeitig abgegeben werden. Beide Medien sollten dabei in etwa auf Körpertemperatur erwärmt werden, um bei dem Patienten, in dessen Mundraum sie eingesetzt werden, keine Reflexe oder Abwehrreaktionen hervorzurufen. Üblicherweise kann die Heizung der einzelnen Medien auch abgeschaltet werden, um bewusst kalte Medien zuzuführen und damit beispielsweise nach bestimmten Behandlungen Reflexe des Patienten zu testen.

Um die von dem Spritzhandstück abgegebenen Medien auf eine möglichst gleichbleibende Temperatur zu erwärmen, ist aus der EP 0 525 443 A1 bekannt, die Heizleistung dem Medienverbrauch anzupassen. Hierzu wird die den Heizelementen zugeführte Leistung mit Hilfe einer Impulspaketsteuerung, welche ein im Heizstromkreis liegendes und von einem Stellglied betätigbares Schaltelement umfasst, zwischen einer Untergrenze, die einer abgeschalteten Heizung entspricht, und einer maximalen Heizleistung variiert. Die Möglichkeit der Änderung der Heizleistung besteht auch bei einem aus der DE 195 48 444 C1 bekannten Handstück. Hier wird in Abhängigkeit von der Durchflussmenge des abgegebenen Mediums mit Hilfe einer in einem Steuerbaustein abgelegten Kennlinie eine elektrisch verarbeitbare Größe abgeleitet, die einer erforderlichen Heizleistung zum Erreichen der gewünschten Medientemperatur entspricht.

Da bei dem aus der DE 195 48 444 C1 bekannten Handstück die zum Erreichen einer gewünschten Temperatur erforderliche Heizleistung mit Hilfe der vorgegebenen Kennlinie bestimmt wird, können äußere Einflüsse, wie beispielsweise eine Temperaturänderung des von einem Ausgangsreservoir zur Verfügung gestellten Mediums nicht mehr berücksichtigt werden. Somit werden zwar aufwendige Maßnahmen zur genauen Temperaturregelung vermieden, allerdings wird hierdurch eine gewisse Ungenauigkeit in der letztendlich erzielten Temperatur des abgegebenen Mediums in Kauf genommen.

Um die Temperatur des Mediums möglichst exakt einzustellen, sind bei einem aus der DE 39 01 198 A1 bekannten Handstück Temperatursensoren vorgesehen, die innerhalb des Handstücks und damit sehr nahe an der Ausgangsdüse angeordnet sind. Diese Temperatursensoren sind mit Regeleinheiten, die ebenfalls in dem Handstück untergebracht sind, verbunden, wobei die Regeleinheiten in Abhängigkeit von den Sensorsignalen die Heizelemente ansteuern. Mit Hilfe dieses Regelkreises kann somit die Temperatur der abgegebenen Medien sehr exakt eingestellt werden. Da die Temperatursensoren ferner nahe an der Abgabedüse des Handstücks angeordnet sind, kann ein Abkühlen der Medien auf dem Weg von dem Heizelement zur Düse ebenfalls berücksichtigt werden. Auch bei einem aus der US 5,123,839 bekannten Handstück findet eine geregelte Heizung sowohl der Luft als auch des Wassers statt.

Die Verwendung eines Regelkreises für die Medienheizung ermöglicht somit eine sehr präzise Einstellung der Medientemperatur, da die Regelung allerdings gewisse Verzögerungseffekte mit sich bringt, verlängert sich der Zeitraum, bis nach dem Einschalten von Luft und/oder Wasser die gewünschte Endtemperatur für die beiden Medien erreicht wird. Darüber hinaus wird der Energieverbrauch bei einer gleichzeitigen Temperaturregelung beider Medien erhöht.

Der vorliegenden Erfindung liegt die Aufgabe zugrunde, die bisher bekannten Vorrichtungen zum Heizen der Medien in einem zahnärztlichen Handstück derart zu verbessern, dass nach einem Einschalten der Medien diese möglichst schnell auf die gewünschte Solltemperatur erwärmt werden.

Diese Aufgabe wird durch eine Vorrichtung, welche die Merkmale des Anspruchs 1 aufweist, gelöst. Die Vorrichtung weist zunächst zumindest eine über einen Schalter zu öffnende Medienleitung, ein der Medienleitung zugeordnetes Heizelement, einen die Temperatur des Mediums erfassenden Temperatursensor sowie eine Regelschaltung auf. Die Regelschaltung ist dabei mit dem Temperatursensor verbunden und steuert das Heizelement in Abhängigkeit von den Sensorsignalen an, wie dies bereits aus der DE 39 01 198 A1 bekannt ist.

Die erfindungsgemäße Lösung besteht darin, dass das Heizelement nach einem Betätigen des Schalters für einen kurzen Zeitraum unabhängig von dem Ausgangssignal der Regelschaltung bei einer vorgegebenen Heizleistung betrieben wird. Zu diesem Zweck weist die erfindungsgemäße Vorrichtung ein RC-Glied auf. Die Heizung wird hierdurch unabhängig von dem Ausgangssignal der Regelschaltung auf jeden Fall kurz eingeschaltet, wobei durch das Unterdrücken der Regelung im Anfangsstadium das an der Ausgangsdüse austretende Medium in kürzester Zeit auf die gewünschte Solltemperatur geheizt wird.

Weiterbildungen der Erfindung sind Gegenstand der Unteransprüche.

So ist gemäß einem bevorzugten Ausführungsbeispiel vorgesehen, dass die Vorrichtung zum geregelten Erwärmen von Luft und Wasser ausgebildet ist, wobei bei einem gleichzeitigen Betätigen der Schalter für Luft und für Wasser das Heizelement für die Luft-Medienleitung abgeschaltet wird. Bei einem Spraybetrieb des Handstücks wird somit ausschließlich das Wasser erwärmt, während auf die zusätzliche Erwärmung der Luft verzichtet wird, um nicht unnötig Energie zu verbrauchen. Das Abschalten der Luftheizung wirkt sich dabei auf die Temperatur des Sprays nur unwesentlich aus, da diese ohnehin nahezu vollständig von der Wassertemperatur bestimmt wird.

Der Zeitraum für die oben beschriebene Unterdrückung der Heizungsregelung ist vorzugsweise von dem Einschaltintervall des Schalters für die Medienleitung abhängig. Dies kann für den Fall, dass die Regelschaltung zum Betreiben des Heizelementes mit Hilfe eines Transistors einen Optotriac schaltet, der wiederum einen Leistungstriac für den Heizstrom des Heizelementes schaltet, dadurch erreicht werden, dass an den Basisanschluss des Transistors ein RC-Glied angeschlossen ist, welches nach dem Betätigen des Schalters das Ausgangssignal der Regelschaltung für einen kurzen Zeitraum unterdrückt. Der Entladewiderstand für den Kondensator des RC-Glieds sorgt nun dafür, dass die Unterdrückungszeit der Regelung vom Einschaltintervall des Schalters abhängig gemacht wird. Der Zeitraum, für den die Regelung unterdrückt wird, beträgt dabei vorzugsweise ca. eine Sekunde, wobei diese Unterdrückung der Regelung vorzugsweise ausschließlich für die Heizung der Luft vorgesehen ist.

Die Temperatursensoren sowie die weiteren elektronischen Komponenten der erfindungsgemäßen Heizvorrichtung sind vorzugsweise vollständig in dem zahnärztlichen Handstück angeordnet, um die sich durch die Temperaturregelung bietenden Vorteile vollständig ausnutzen zu können.

Eine andere Weiterbildung der vorliegenden Erfindung betrifft die in den elektronischen Komponenten der Heizvorrichtung, insbesondere an den Leistungstriacs zum Ansteuern der Heizelemente auftretende Verlustleistung. Um diese zu minimieren kann die an dem Leistungstriac für die Wasserheizung auftretende Verlustwärme direkt an das zu erwärmende Wasser zurückgeführt werden. Die Rückführung erfolgt mit Hilfe eines Wärmetauscherelements, das an die Wasserleitung angeschlossen und mit dem Leistungstriac thermisch gekoppelt ist. Hierdurch wird zum einen die Energieausnutzung der Medienheizung optimiert, zum anderen wird die Wärmeabfuhr von dem Leistungstriac verbessert und damit eine unerwünschte Erwärmung des Handstücks verhindert.

Nachfolgend soll die Erfindung anhand der beiliegenden Zeichnungen näher erläutert werden. Es zeigen:
- Fig. 1: ein zahnärztliches Spritzhandstück, bei dem die erfindungsgemäße Vorrichtung zum Einsatz kommen soll, in seitlicher Ansicht;
- Fig. 2: das zahnärztliche Spritzhandstück im Teilschnitt;
- Fig. 3: die wesentlichen Elemente der erfindungsgemäßen Heizvorrichtung in perspektivischer Ansicht;
- Fig. 4a, 4b: verschiedene Ansichten einer Platine, welche die wesentlichen Elemente der Heizvorrichtung trägt;
- Fig. 5: die Unterseite der Platine für ein bevorzugtes Ausführungsbeispiel;
- Fig. 6a-c: verschiedene Varianten des in Fig. 5 dargestellten Ausführungsbeispiels im Schnitt; und
- Fig. 7: ein Blockschaltbild der erfindungsgemäßen Heizvorrichtung.

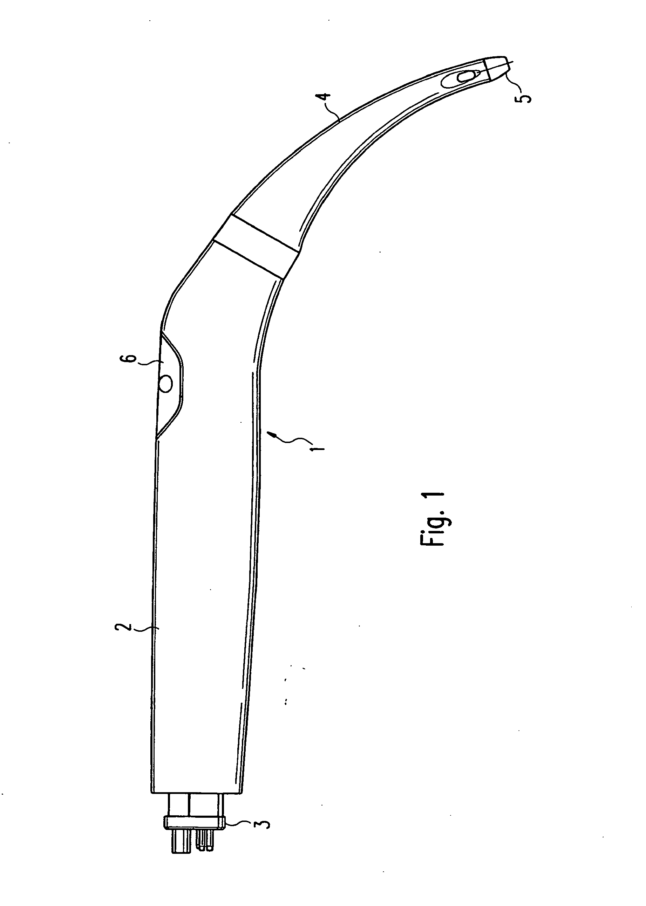

Das in Fig. 1 dargestellte zahnärztliche Spritzhandstück 1 besteht aus einem länglichen Griffkörper 2, an dessen Rückseite eine Medienkupplung 3 angeordnet ist, über die das Handstück 1 an einen üblichen Versorgungsschlauch angeschlossen werden kann. Die Medienkupplung 3 weist hierfür einzelne Anschlussstutzen für die Medien Luft und Wasser sowie weitere Versorgungsleitungen für beispielsweise Strom und Licht auf.

Am vorderen Ende des Griffkörpers 2 ist ein gebogener Düsenkörper 4 angeordnet, an dessen freien Ende sich die Düse 5 zum Abgeben von Luft und/oder Wasser befindet. Über den Düsenkörper 4 kann darüber hinaus auch Licht auf die zu behandelnde Stelle gerichtet werden.

Im vorderen Bereich des länglichen Griffkörpers 2 befindet sich an dessen Oberseite ein Tastfeld 6 mit zwei Betätigungselementen für die Medien Luft und Wasser. Über die Betätigungselemente kann das Ventil für die entsprechende Medienleitung geöffnet sowie ein Schalter für die entsprechende Medienheizung geschlossen werden. Bei einem gleichzeitigen Betätigen beider Betätigungselemente werden die Medienleitungen für Luft und Wasser gleichzeitig geöffnet, so dass Luft und Wasser mit Hilfe der an dem vorderen Ende des Düsenkörpers 4 angeordneten Düse 5 in Form eines Sprays abgegeben werden können.

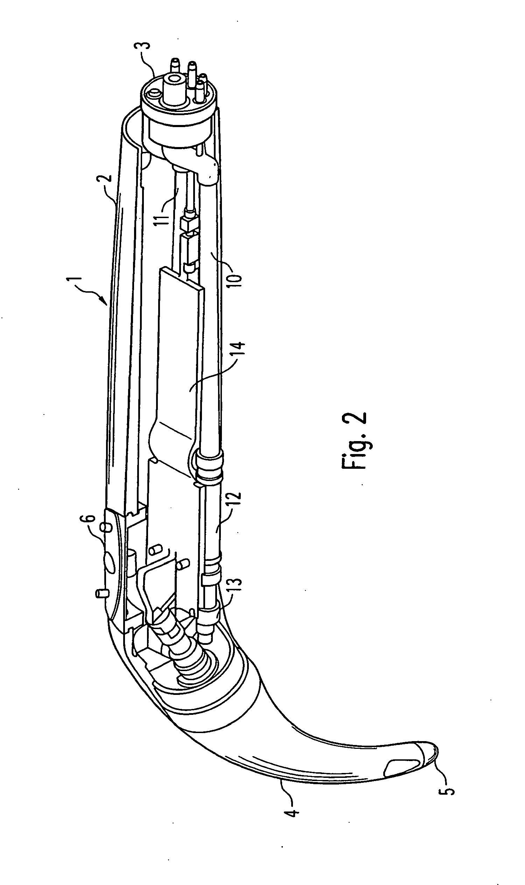

Fig. 2 zeigt einen Teil der im Inneren des Handstücks 1 angeordneten Elemente. Aus Gründen der Übersichtlichkeit sind die über das Tastfeld 6 betätigbaren Schalthebel zum Öffnen der Medienleitungen und Einschalten der Medienheizungen ebenso nicht dargestellt, wie die elektronischen Komponenten der Temperaturregelung. Innerhalb des Griffkörpers 2 verlaufen in Längsrichtung die beiden Medienleitungen 10 und 11 für Luft bzw. Wasser. Beide Medienleitungen 10 und 11 sind an ihrem hinteren Ende mit der Medienkupplung 3 verbunden. Im vorderen Bereich der Medienleitung 10 für Luft befindet sich ein Heizelement 12, mit dessen Hilfe die durch die Medienleitung 10 strömende Luft erwärmt wird. Bei dem Heizelement kann es sich beispielsweise um eine übliche Heizpatrone handeln, welche die Medienleitung 10 fortsetzt, so dass die Luft beim Durchströmen der Heizpatrone 12 erwärmt wird. In gleicher Weise ist auch für die Medienleitung 11 für Wasser ein entsprechendes Heizelement vorgesehen.

Um eine Temperaturregelung zu ermöglichen, ist am vorderen Ende der Medienleitung 10 für Luft ein Temperatursensor 13 angeordnet, der die Temperatur der Luft nach Durchströmen des Heizelements 12 misst. Diese Anordnung des Temperatursensors 13 ist von Vorteil, da einerseits sehr nahe an dem Heizelement 12 gemessen und somit ein unbeabsichtigtes Durchbrennen des Heizelements 12 vermieden wird. Andererseits befindet sich der Sensor 13 sehr nahe an der Abgabestelle des Mediums, so dass eine auf der letzten Wegstrecke bis zur Düse 5 nicht zu vermeidende Abkühlung des Mediums vernachlässigbar gering bleibt. Ein zweiter Temperatursensor für die Medienleitung 11 für Wasser ist in gleicher Weise an der gegenüberliegenden Seite des Griffkörpers angeordnet.

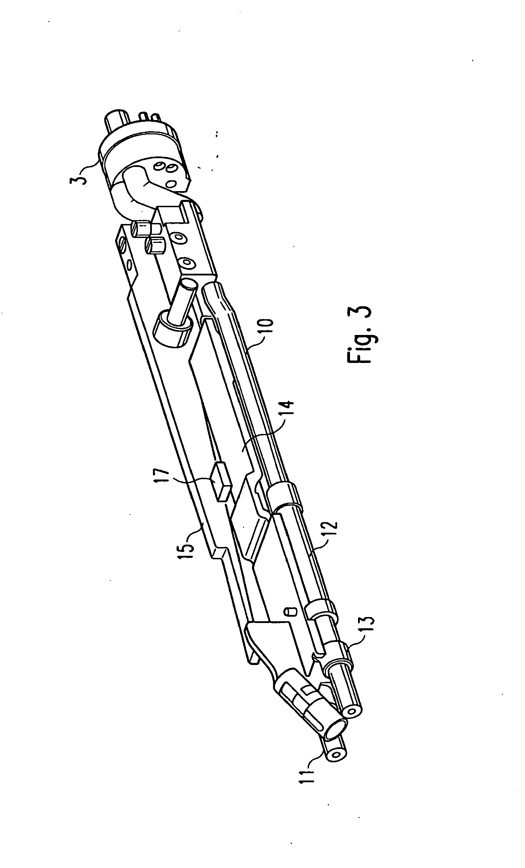

Die elektronischen Komponenten der erfindungsgemäßen Medienheizung sind auf einer länglichen Basisplatine 14 angeordnet, die nachfolgend näher erläutert werden soll. Fig. 3 zeigt hierzu nochmals die wesentlichen Bestandteile der erfindungsgemäßen Vorrichtung zum Erwärmen der Medien. Dabei ist auch einer der beiden Schalthebel 15 dargestellt, der bei einem Betätigen des entsprechenden Betätigungselements an der Außenseite des Handstücks herabgedrückt wird, um zum einen das Ventil für die entsprechende Medienleitung zu öffnen und zum anderen die Heizung für dieses Medium zu aktivieren. Das Aktivieren der Heizung erfolgt durch einen von dem Hebel zur Innenseite vorragenden Vorsprung, der einen auf der Basisplatine 14 befindlichen (nicht dargestellten) Taster herabdrückt.

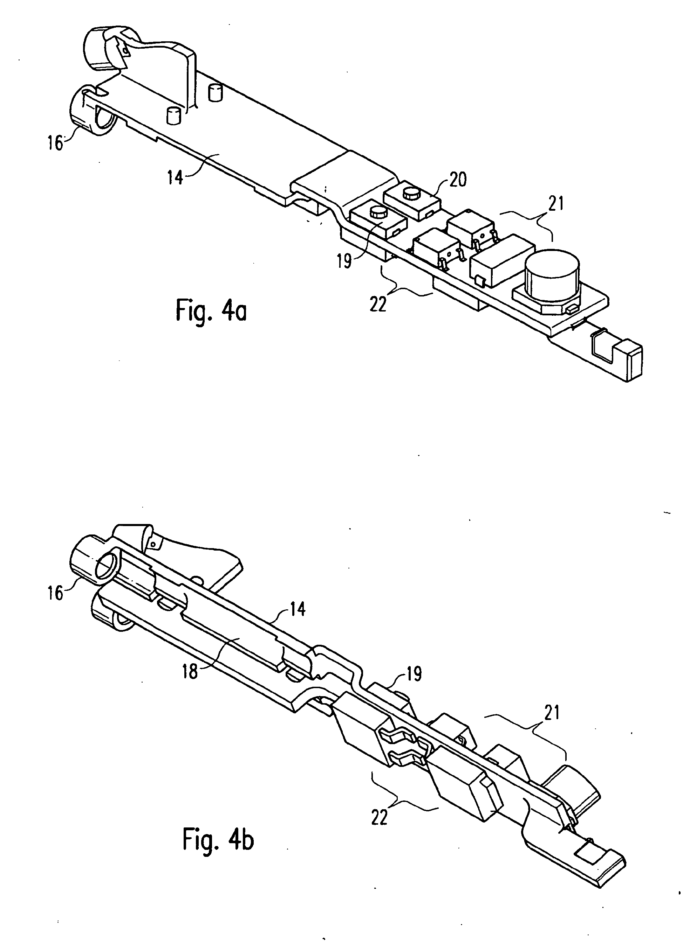

Bei der Basisplatine 14 handelt es sich um einen spritzgegossenen Schaltungsträger, ein sogenanntes 3D-MID (molded interconnected device). Derartige Schaltungsträger vereinigen sowohl mechanische als auch elektronische Funktionen in einem einzigen Element und bieten dementsprechend die Möglichkeit, die Abmessungen der Gesamtvorrichtung möglichst gering zu halten. Hierdurch wird der Einbau der kompletten Heizvorrichtung in das Handstück ermöglicht. Den verschiedenen Ansichten in den Fig. 4a und 4b der Basisplatine 14 kann entnommen werden, dass an deren Unterseite Führungen 18 für die röhrenförmigen Heizelemente vorgesehen sind, so dass eine zuverlässige Befestigung ermöglicht wird. Am vorderen Ende befinden sich ferner röhrenförmige Anschlussstutzen 16, an welche die Ausgänge der Heizelemente angeschlossen werden. Innerhalb dieser Anschlussstutzen 16 befinden sich auch die Temperatursensoren, mit deren Hilfe die Temperatur des von den Heizelementen abgegebenen Mediums bestimmt wird.

Im hinteren Bereich der Basisplatine 14 sind zum einen die beiden Taster 19 und 20 angeordnet, die beim Herabdrücken des entsprechenden Schalthebels die zugehörige Medienheizungen aktivieren. Ferner sind an der Ober- und Unterseite die weiteren, allgemein mit den Bezugszeichen 21 und 22 versehenen elektronischen Komponenten der Heizung angeordnet, insbesondere die beiden später erläuterten Leistungstriacs 22 zum Betreiben der Medienheizungen 12. Die elektrische Verbindung zwischen den verschiedenen Komponenten und Tastern wird über Leiterbahnen hergestellt, die an den Ober- und Unterseiten der Basisplatine 14 sowie durch die Platine 14 hindurch verlaufen.

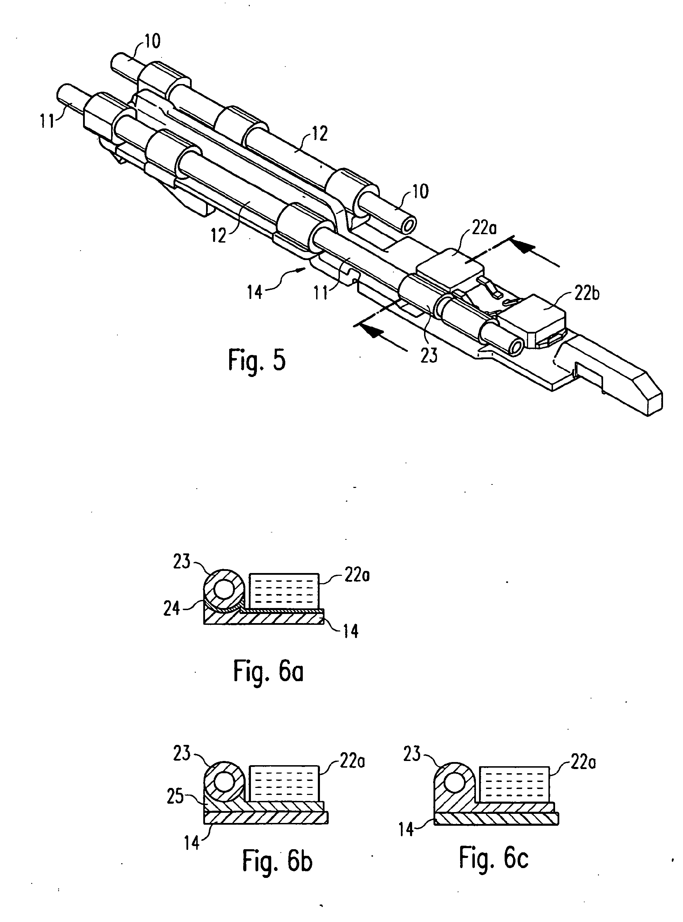

Fig. 5 zeigt eine besonders bevorzugte Variante der erfindungsgemäßen Heizvorrichtung. Um die nicht zu vernachlässigende Verlustleistung der Heizung zu minimieren, wird die an dem Leistungstriac 22a für die Wasserheizung auftretende Verlustwärme direkt an das zu erwärmende Wasser zurückgeführt. Die Rückführung erfolgt mit Hilfe eines Wärmetauscherelements 23, das an die Wasserleitung 11 angeschlossen ist. Hierdurch wird zum einen die Energieausnutzung der Medienheizung optimiert, zum anderen wird die Wärmeabfuhr von dem Leistungstriac 22a verbessert und damit eine unerwünschte Erwärmung des Handstücks verhindert. Diese Wärmerückführung ist vorzugsweise lediglich für die Wasserheizung vorgesehen.

Für die Rückführung der Verlustwärme sind verschiedene Varianten denkbar, die nachfolgend anhand der Schnittdarstellungen der Fig. 6a bis 6c erläutert werden sollen.

Bei der ersten Variante gemäß Fig. 6a ist die Basisplatine 14 derartig ausgeformt, dass das Wärmetauscherelement 23 in seiner Lage fixiert wird und eine Wärmeaustauschfläche zwischen Wärmetauscherelement 23 und Leistungstriac 22a gebildet wird. Die Auflageflächen des Wärmetauscherelements 23 und Leistungstriacs 22a, sowie der dazwischen liegende Bereich der Basisplatine 14 sind mit einer metallisierten Schicht 24 versehen. Diese Schicht 24, die analog zu Leiterbahnen aufgebaut ist, gewährleistet eine thermische Verbindung und damit einer Wärmeableitung von dem Leistungstriac 22a zu dem Wärmetauscherelement 23. Diese erste Variante zeichnet sich insbesondere durch ihren einfachen Aufbau aus.

Bei der zweiten Variante gemäß Fig. 6b ist ein zusätzlicher Kühlkörper 25 als Wärmetransportmittel vorgesehen, der so geformt ist, dass eine größtmögliche Wärmeaustauschfläche zwischen Leistungstriac 22a und Wärmetauscherelement 23 gebildet wird. Der Kühlkörper 25 ist zwischen der Basisplatine 24 einerseits und dem Leistungstriac 22a bzw. dem Wärmetauscherelement 23 andererseits eingesetzt und ermöglicht eine im Vergleich zu der in Fig. 6a dargestellten Variante verbesserte Wärmeleitung.

Bei der dritten Variante gemäß Fig. 6c schließlich ist das Wärmetauscherelement 23 einstückig ausgeführt und derart gestaltet, dass der Leistungstriac 22a direkt auf diesem angeordnet werden kann. Diese dritte Variante ermöglicht eine nochmals verbesserte Wärmeübertragung. Die Wärmekopplung aller drei Varianten kann schließlich weiter verbessert werden, indem im Bereich der Auflageflächen des Leistungstriacs 22a und des Wärmetauscherelements 23 zusätzliche eine Wärmeleitpaste aufgebracht wird.

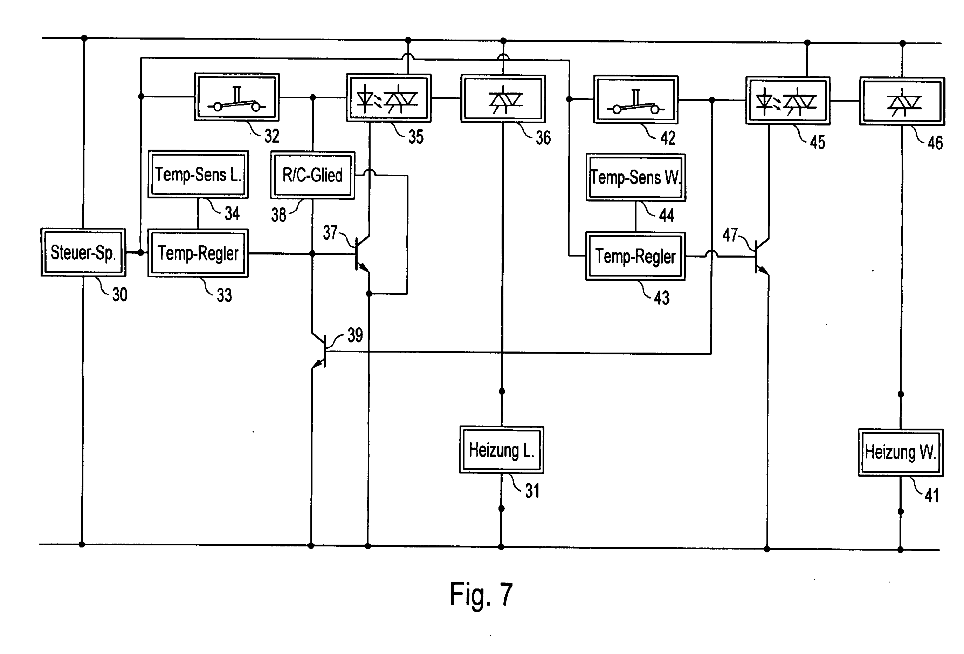

Anhand des Blockschaltbilds in Fig. 7 soll nachfolgend die Funktionsweise der erfindungsgemäßen Heizungsvorrichtung erläutert werden. Dabei wird für die Steuerung und Heizung lediglich eine einzige Versorgungsspannung von vorzugsweise 24 Volt AC benötigt, an die sämtliche Komponenten der Heizvorrichtung, also sowohl die Regeleinheiten aus auch die Heizelemente angeschlossen sind.

Das Blockschaltbild in Fig. 7 zeigt einen Steuerbaustein 30, der für die Aktivierung der Heizvorrichtung insgesamt verantwortlich ist, sowie die beiden Heiz- und Regelkreise für Luft und für Wasser. Beide Heizkreise bestehen dabei zunächst aus einem Schalter 32 bzw. 42, der beim Betätigen des entsprechenden Betätigungselements an der Oberseite des Handstücks und dem Öffnen des Medienventils über einen Schalthebel geschlossen wird und damit die entsprechende Medienheizung einschaltet. Die Heizelemente 31 und 41 für Luft und für Wasser werden jeweils über einen Leistungstriac 36 bzw. 46 betrieben, über den die Leistung für die beiden Heizelemente 31, 41 eingestellt wird. Die Ansteuerung des Leistungstriacs 36 bzw. 46 erfolgt jeweils über einen im Null-Durchgang schaltenden Optotriac 35 bzw. 45, mit dessen Hilfe eine Störunterdrückung ermöglicht wird. Die Ansteuerung des Optotriacs 35 bzw. 45 erfolgt durch Regelschaltungen 33 bzw. 43, die je nach erforderlicher Heizleistung einen Transistor 37 bzw. 47 ansteuern, an dessen Ausgang der Optotriac 35 bzw. 45 angeschlossen ist.

Die Regelschaltungen 33 bzw. 43 sind jeweils mit dem entsprechenden Temperatursensor 34 bzw. 44 verbunden und erzeugen in Abhängigkeit von den Sensorsignalen Steuersignale für die jeweiligen Transistoren 37 bzw. 47. Mit Hilfe dieser Steuersignale werden somit die beiden Leistungstriacs 36 und 46 mit der zum Erreichen einer gewünschten Temperatur für das Medium erforderliche Leistung betrieben.

Die Medienheizung für Luft weist gegenüber der Medienheizung für Wasser zusätzlich noch ein RC-Glied 38 auf, das mit dem Basisanschluss des Transistors 37 verbunden ist und diesen mit dem Ausgang des Schalters 32 verbindet. Bei einem Schließen des Schalters 32 - also dem Einschalten der Medienheizung für die Luft - bewirkt das RC-Glied 38, das die Ausgangssignale der Regelschaltung 33 für einen kurzen Zeitraum unterdrückt werden und der Transistor 37 so angesteuert wird, dass das Heizelement 31 für einen kurzen Zeitraum bei maximaler Heizleistung betrieben wird. Hierdurch wird erreicht, dass die Luft bei einem Öffnen der Medienleitung sehr schnell auf die gewünschte Temperatur aufgeheizt wird. Da sich der Kondensator des RC-Gliedes nach einem Öffnen des Schalters 32 mit einer gewissen Verzögerung wieder entlädt, kann diese Unterdrückungszeit für die Regelung der Heizung vom Einschaltintervall des Schalters anhängig gemacht werden. Vorzugsweise beträgt der Zeitraum für die Unterdrückung der Temperaturregelung der Luftheizung in etwa eine Sekunde.

Eine weitere Besonderheit der Heizung besteht darin, dass beim Schließen des Schalters 42 für die Medienheizung Wasser ein zusätzlicher Transistor 39 so angesteuert wird, dass die Medienheizung Luft vollständig abgeschaltet wird. Dies hat für den Fall, dass die Schalter für Luft und Wasser gleichzeitig geschlossen werden, um das Spritzhandstück im Spraybetrieb zu betreiben, zur Folge, dass ausschließlich die Heizung für das Wasser aktiviert und dementsprechend die Energie für eine zusätzliche Heizung der Luft gespart wird. Da die Temperatur des Sprays aufgrund des höheren Wärmekoeffizienten des Wassers ohnehin hauptsächlich durch die Wassertemperatur bestimmt wird, hat der Verzicht auf die Luftheizung keine wesentliche Temperaturänderung zur Folge, reduziert aber den Energieverbrauch der Medienheizung.

Die vorliegende Erfindung ermöglicht somit eine effektive und energiesparende Möglichkeit, die Temperatur der von einem Spritzhandstück abgegebenen Medien auf einen gewünschten Wert einzustellen. Dabei kann die Vorrichtung vollständig und platzsparend in ein Handstück integriert werden.

## Patentansprüche

1. Vorrichtung zum geregelten Erwärmen von Medien in einem zahnärztlichen Handstück (1) mit
a) zumindest einer über einen Schalter (32) zu öffnenden Medienleitung (10),
b) einem der Medienleitung (10) zugeordneten Heizelement (12, 31).
c) einem die Temperatur des Mediums erfassenden Temperatursensor (13,34) sowie
d) einer Regelschaltung (33), welche mit dem Temperatursensor (13, 34) verbunden ist und das Heizelement (12, 31) in Abhängigkeit von den Sensorsignalen ansteuert,
**gekennzeichnet durch**
ein RC-Glied (38), welches das Ausgangssignal der Regelschaltung (33) für einen Unterdrückungszeitraum nach einem Betätigen des Schalters (32) unterdrückt.

2. Vorrichtung nach Anspruch 1,
**dadurch gekennzeichnet,**
**dass** die Unterdrückungszeit der Regelung von dem Einschaltinterval des Schalters (32) abhängig ist.

3. Vorrichtung nach Anspruch 1 oder 2,
**dadurch gekennzeichnet,**
**dass** die Vorrichtung eine weitere, von einem zweiten Schalter (42) zu öffnende Medienleitung (11) aufweist, der ein zweites Heizelement (41), ein zweiter Temperatursensor (44) sowie eine zweite Regelschaltung (43) zugeordnet sind, wobei Ansteuerung des zweiten Heizelements (41) durch die zweite Regelschaltung (43) grundsätzlich von den Sensorsignalen des zweiten Temperatursensors abhängig ist.

4. Vorrichtung nach Anspruch 3,
**dadurch gekennzeichnet,**
**dass** die erste Medienleitung (10) zur Abgabe von Luft und die zweite Medienleitung (11) zur Abgabe von Wasser vorgesehen ist, wobei bei einem gleichzeitigen Betätigen des beiden Schalter (32, 42) das Heizelement (31) für die Luft-Medienleitung (10) abgeschaltet ist.

5. Vorrichtung nach einem der Ansprüche 1 bis 4,
**dadurch gekennzeichnet,**
**dass** die Regelschaltung (33) bzw. Regelschaltungen (33, 43) über einen Transistor (37, 47) einen im Nulldurchgang schaltenden Optotriac (35, 45) ansteuern, der einen Leistungstriac (36, 46) für den Heizstrom des jeweiligen Heizelements (12, 31, 41), schaltet.

6. Vorrichtung nach Anspruch 5.
**dadurch gekennzeichnet,**
**dass** das RC-Glied (38) zum Unterdrücken des Ausgangssignals der Regelschaltung (33) an den Basisanschluß des Transistors (37) für die Luftheizung angeschlossen ist.

7. Vorrichtung nach einem der Ansprüche 1 bis 6,
**dadurch gekennzeichnet,**
**dass** der bzw. die Temperatursensoren (34, 44) direkt in der zugeordneten Medienleitung (10, 11) angeordnet sind.

8. Vorrichtung nach einem der Ansprüche 5 bis 7,
**dadurch gekennzeichnet,**
**dass** in der Medienleitung (11) für Wasser ein Wärmetauscherelement (23) vorgesehen ist, welches zur Rücktührung der an dem Leistungstriac (22a, 46) für die Wasserheizung entstehenden Verlustwärme mit diesem thermisch gekoppelt ist.

9. Vorrichtung nach Anspruch 8,
**dadurch gekennzeichnet,**
**dass** der Leistungstriac (22a, 46) für die Wasserheizung und das Wäirmetauscherelement (23) auf einer gemeinsamen Platine (14) angeordnet und über eine metallisierte Schicht miteinander verbunden sind.

10. Vorrichtung nach Anspruch 9,
**dadurch gekennzeichnet,**
**dass** der Leistungstriac (22a, 46) für die Wasserheizung und das Wärmetauscherelement (23) auf einem gemeinsamen Kühlkörper (25) angeordnet sind.

11. Vorrichtung nach Anspruch 8,
**dadurch gekennzeichnet,**
**dass** das Wärmetauscherelement (23) eine Auflagefläche für den Leistungstriac (22a, 46) für die Wasserheizung bildet.

12. Vorrichtung nach einem der Ansprüche 8 bis 11,
**dadurch gekennzeichnet,**
**dass** im Bereich der Auflageflächen für den Leistungstriac (22a, 46) für die Wasserheizung und den Wärmetauscherelements (23) zusätzliche eine Wärmeleitpaste aufgebracht ist.

13. Zahnärztliches Spritzhandstück zur Abgabe von Luft und/oder Wasser,
**gekennzeichnet durch**
eine Heizvorrichtung zum geregelten Erwärmen der Medien nach einem der Ansprüche 1 bis 12.

14. Zahnärztliches Spritzhandstück nach Anspruch 13,
**dadurch gekennzeichnet,**
**dass** der bzw. die Temperatursensoren sowie die weiteren elektronischen Komponenten der Heizvorrichtung vollständig in dem Handstück angeordnet sind.

## Claims

1. Device for regulated heating of media in a dental handpiece (1), with
a) at least one medium line (10) to be opened via a switch (32),
b) a heating element (12, 31) which is associated with the medium line (10),
c) a temperature sensor (13, 34) which captures the temperature of the medium, and
d) a regulating circuit (33), which is connected to the temperature sensor (13, 34) and controls the heating element (12, 31) depending on the sensor signals,
**characterized by**
an RC element, (38), which suppresses the output signal of the regulating circuit (33) for a suppression period after the switch (32) is operated.

2. Device according to Claim 1,
**characterized in that**
the suppression time of the regulation depends on the switch-on interval of the switch (32).

3. Device according to Claim 1 or 2,
**characterized in that**
the device has a further medium line (11) which is to be opened by a second switch (42), and with which a second heating element (41), a second temperature sensor (44) and a second regulating circuit (43) are associated, control of the second heating element (41) by the second regulating circuit (43) depending in principle on the sensor signals of the second temperature sensor.

4. Device according to Claim 3,
**characterized in that**
the first medium line (10) is provided to emit air, and the second medium line (11) is provided to emit water, the heating element (31) for the air medium line (10) being switched off if the two switches (32, 42) are operated simultaneously.

5. Device according to one of Claims 1 to 4,
**characterized in that**
the regulating circuit (33) or regulating circuits (33, 43) control, via a transistor (37, 47), an optotriac (35, 45) which switches at the zero crossing and switches a power triac (36, 46) for the heating current of the appropriate heating element (12, 31, 41).

6. Device according to Claim 5,
**characterized in that**
the RC element (38) for suppressing the output signal of the regulating circuit (33) is connected to the base terminal of the transistor (37) for the air heating.

7. Device according to one of Claims 1 to 6,
**characterized in that**
the temperature sensor(s) (34, 44) are arranged directly in the associated medium line (10, 11).

8. Device according to one of Claims 5 to 7,
**characterized in that**
a heat exchanger element (23) is provided in the medium line (11) for water, which, for feeding back the lost heat arising at the power triac (22a, 46), is coupled thermally to the latter, for the water heating.

9. Device according to Claim 8,
**characterized in that**
the power triac (22a, 46) for the water heating and the heat exchanger element (23) are arranged on a common printed circuit board (14) and connected to each other via a metallised layer.

10. Device according to Claim 9,
**characterized in that**
the power triac (22a, 46) for the water heating and the heat exchanger element (23) are arranged on a common heat sink (25).

11. Device according to Claim 8,
**characterized in that**
the heat exchanger element (23) forms a supporting surface for the power triac (22a, 46) for the water heating.

12. Device according to one of Claims 8 to 11,
**characterized in that**
in the region of the supporting surfaces for the power triac (22a, 46) for the water heating and the heat exchanger element (23), in addition a heat-conducting paste is deposited.

13. Dental spraying handpiece for emitting air and/or water,
**characterized by**
a heating device for regulated heating of the media according to one of Claims 1 to 12.

14. Dental spraying handpiece according to Claim 13,
**characterized in that**
the temperature sensor(s) and the further electronic components of the heating device are arranged completely in the handpiece.

## Revendications

1. Dispositif pour l'échauffement régulé de fluides dans une pièce à main dentaire (1) avec
a) au moins une conduite de fluide (10) à ouvrir par le biais d'un commutateur (32),
(b) un élément chauffant (12, 31) associé à la conduite de fluide (10),
(c) un capteur de température (13, 34) relevant la température du fluide ainsi qu'
(d) un circuit de régulation (33) qui est relié au capteur de température (13, 34) et commande l'élément chauffant (12, 31) en fonction des signaux de capteur,
**caractérisé par**
un circuit RC (38) qui supprime le signal de sortie du circuit de régulation (33) pour une période de suppression après un actionnement du commutateur (32).

2. Dispositif selon la revendication 1,
**caractérisé en ce que**
la période de suppression de la régulation dépend de l'intervalle d'activation du commutateur (32).

3. Dispositif selon la revendication 1 ou 2,
**caractérisé en ce que**
le dispositif présente une autre conduite de fluide (11) à ouvrir par un second commutateur (42), à laquelle sont associés un second élément chauffant (41), un second capteur de température (44) ainsi qu'un second circuit de régulation (43), la commande du second élément chauffant (41) par le second circuit de régulation (43) dépendant en principe des signaux de capteur du second capteur de température.

4. Dispositif selon la revendication 3,
**caractérisé en ce que**
la première conduite de fluide (10) est prévue pour délivrer de l'air et la seconde conduite de fluide (11) pour délivrer de l'eau, l'élément chauffant (31) pour la conduite de fluide à air (10) étant désactivé lors d'un actionnement simultané des deux commutateurs (32, 42).

5. Dispositif selon l'une quelconque des revendications 1 à 4,
**caractérisé en ce que**
le circuit de régulation (33) ou les circuits de régulation (33, 43) commandent par le biais d'un transistor (37, 47) un optotriac (35, 45) commutant dans le passage par zéro, qui commute un triac de puissance (36, 46) pour le courant de chauffage de chaque élément chauffant (12, 31, 41).

6. Dispositif selon la revendication 5,
**caractérisé en ce que**
le circuit RC (38) pour la suppression du signal de sortie du circuit de régulation (33) est raccordé au raccordement de base du transistor (37) pour le chauffage de l'air.

7. Dispositif selon l'une quelconque des revendications 1 à 6,
**caractérisé en ce que**
le ou les capteurs de température (33, 44) sont disposés directement dans la conduite de fluide (10, 11) associée.

8. Dispositif selon l'une quelconque des revendications 5 à 7,
**caractérisé en ce que**
dans la conduite de fluide (11) pour l'eau, un élément d'échange de chaleur (23) est prévu, lequel est couplé thermiquement pour le retour de chaleur perdue produite sur le triac de puissance (22a, 46) pour le chauffage de l'eau à celui-ci.

9. Dispositif selon la revendication 8,
**caractérisé en ce que**
le triac de puissance (22a, 46) pour le chauffage de l'eau et l'élément d'échange de chaleur (23) sont disposés sur une platine (14) commune et sont reliés entre eux par une couche métallisée.

10. Dispositif selon la revendication 9,
**caractérisé en ce que**
le triac de puissance (22a, 46) pour le chauffage de l'eau et l'élément d'échange de chaleur (23) sont disposés sur un corps de refroidissement (25) commun.

11. Dispositif selon la revendication 8,
**caractérisé en ce que**
l'élément d'échange de chaleur (23) forme une surface d'appui pour le triac de puissance (22a, 46) pour le chauffage de l'eau.

12. Dispositif selon l'une quelconque des revendications 8 à 11,
**caractérisé en ce que**
dans la zone des surfaces d'appui pour le triac de puissance (22a, 46) pour le chauffage de l'eau et l'élément d'échange de chaleur (23) est appliquée en outre une pâte thermoconductrice.

13. Pièce à main d'injection dentaire pour la délivrance d'air et/ou d'eau,
**caractérisée par**
un dispositif de chauffage pour l'échauffement régulé des fluides selon l'une quelconque des revendications 1 à 12.

14. Pièce à main d'injection dentaire selon la revendication 13,
**caractérisée en ce que**
le ou les capteurs de température ainsi que les autres composants électroniques du dispositif de chauffage sont disposés entièrement dans la pièce à main.
